**Europäisches Patentamt**

**European Patent Office**

**Office européen des brevets**

(11) Veröffentlichungsnummer: **0 163 195**
**A2**

(12) # EUROPÄISCHE PATENTANMELDUNG

(21) Anmeldenummer: **85105896.6**

(22) Anmeldetag: **14.05.85**

(51) Int. Cl.⁴: **B 60 J 1/02**

(30) Priorität: **28.05.84 DE 3419893**

(43) Veröffentlichungstag der Anmeldung:
**04.12.85 Patentblatt 85/49**

(84) Benannte Vertragsstaaten:
**DE FR GB IT**

(71) Anmelder: **METZELER KAUTSCHUK GMBH**
**Gneisenaustrasse 15**
**D-8000 München 50(DE)**

(72) Erfinder: **Caspari, Horst**
**Poststrasse 50**
**D-6800 Mannheim 41(DE)**

(72) Erfinder: **Schröter, Klaus**
**Agnesstrasse 24**
**D-6520 Worms(DE)**

(74) Vertreter: **Michelis, Theodor, Dipl.-Ing.**
**Gneisenaustrasse 15**
**D-8000 München 50(DE)**

(54) **Verfahren zum Konfektionieren einer Glasscheibe auf einen Rahmen aus elastomerem Material.**

(57) Zum dauerhaften Konfektionieren einer Glasscheibe im Flush-Glasing-Verfahren auf die Außenseite eines Rahmens aus elastomerem Material werden erfindungsgemäß nacheinander ein lackförmiger Primer auf PU-Basis auf den Glasscheiben-Nutausschnitt des zumindest teilvulkanisierten Elastomerrahmens aufgebracht, der Rahmen mit dem aufgebrachten Primer nachgeheizt, ein weiterer Lack-primer aufgetragen, gleichzeitig nach Reinigen des Umfangsrandes der Glasscheibe mit einem hydrophoben Lösungsmittel ein schwarzer Glasprimer auf Basis eines selbsttätig polymerisierenden PU-Lackes sowie eine Zwei-komponenten-Kleberschicht aufgebracht und die so vorbehandelte Glasscheibe auf den vulkanisierten Rahmen aufgesetzt.

FIG.4

Croydon Printing Company Ltd.

METZELER KAUTSCHUK GMBH     München, den 8.5.1985
Unser Zeichen: MK 343 P 84 EP

## Verfahren zum Konfektionieren einer Glasscheibe auf einen Rahmen aus elastomerem Material

Die Erfindung betrifft ein Verfahren zum dauerhaften Konfektionieren einer Glasscheibe, insbesondere einer Front- oder Heckscheibe für Kraftfahrzeuge, auf die Außenseite eines Rahmens aus einem elastomeren Material, unter Raumtemperatur.

Im Bestreben den Luftwiderstand von Kraftfahrzeugen zu minimieren ist es bekannt, die entsprechenden Scheiben, wie insbesondere die großen Front- und Heckscheiben, direkt in das Kraftfahrzeug einzukleben, wobei die Scheiben meist nur noch von einem sehr schmalen Rand eines herkömmlichen Gummiprofils umgeben sind. Ein derartiges direktes Einkleben der Scheiben ist jedoch mit gewissen Schwierigkeiten des Handlings bezüglich der genauen Halterung und der erforderlichen Mindestzeitspanne zum Aushärten des verwendeten Klebers verbunden.

Eine weitere Möglichkeit des sogenannten Flush-Glasings besteht darin, die Scheiben mit einem vorher an diese angesetzten Rahmen als integrierte Baueinheit in das Kraftfahrzeug einzusetzen. Ein direktes Anspritzen des Rahmens an die Scheibe  - wie bei kleinen Dreiecksfenstern üblich - ist jedoch wegen der üblichen Größe derartiger Front- und Heckscheiben rein fertigungstechnisch nur mit sehr großem Aufwand möglich.

Der Erfindung liegt demgegenüber die Aufgabe zugrunde, ein Verfahren anzugeben, mit dem auch derart große Glasscheiben auf einen Rahmen aus herkömmlichem elastomeren Material aufkonfektioniert werden können, wobei der Rahmen gegenüber der Scheibenoberfläche keine hervorstehenden, d.h. den Scheibenrad von außen umfassenden Bereiche aufweisen, sondern ein praktisch stufenloser Übergang gegeben ist. Wesentlich dabei ist, daß dieses Verfahren für das Konfektionieren bei Raumtemperatur stattfinden kann, so daß also sowohl Einscheibensicherheitsglas als auch Verbundsicherheitsglas eingesetzt werden kann.

Zur Lösung dieser Aufgabe sind erfindungsgemäß die folgenden Verfahrensschritte vorgesehen:

a) Aufbringen eines lackförmigen Primers auf Polyurethan-Basis auf den Glasscheiben-Nutausschnitt des zumindest teilvulkanisierten Elastomer-Rahmens;

b) Nachheizen des mit dem Primer versehenen Rahmens;

c) Auftragen eines Lackprimers;

d) Reinigen des Umfangsrandes der Glasscheibe mit einem Lösungsmittel;

e) Auftragen eines schwarzen Glasprimers auf Basis eines selbstpolymerisierenden Polyurethan-Lackes;

f) Aufbringen einer Zweikomponenten-Kleberschicht auf den Glasprimer-Rand;

g) Einsetzen der vorbehandelten Glasscheiben auf den vulkanisierten Rahmen.

Dabei ist es einmal möglich, daß der PU-Primer auf den einen Vulkanisationsgrad von ca. 80 % aufweisenden Rahmen aufgebracht und der Rahmen mit dem Primer anschließend voll ausvulkanisiert wird oder aber daß der PU-Primer auf den vollvulkanisierten Rahmen aufgebracht und der Rahmen mit dem Primer nachgetempert wird.

Als Primer für den Elastomerrahmen eignet sich besonders ein vulkanisierendes Bindemittel.

Anhand einer schematischen Zeichnung ist das Verfahren zur Konfektionierung derartiger Front- und Heckscheiben nach der Erfindung näher erläutert. Dabei zeigen:

Fig. 1     eine Aufsicht auf einen Rahmen mit aufgesetzter Scheibe,

Fig. 2     einen Querschnitt durch eine derartige Scheibe
           mit Rahmen,

Fig. 3     ein Prinzipbild der Verfahrensschritte zur
           Behandlung von Scheibe und Rahmen und

Fig. 4     Möglichkeiten eines Toleranzausgleiches.

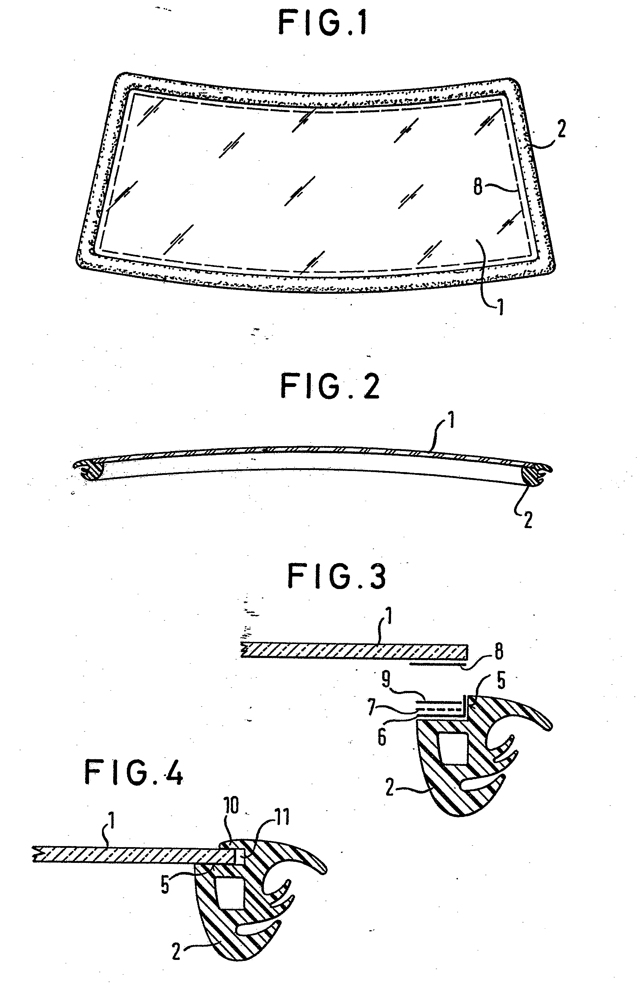

Wie aus Fig. 1 und 2 zu ersehen ist, ist die meist leicht gewölbte Scheibe 1 allseitig von einem Rahmen 2 aus elastomerem Material insbesondere EPDM umgeben, wobei - wie insbesondere aus Fig. 2 zu ersehen ist - Oberkante des Rahmens 2 und Oberseite der Scheibe 1 glatt abschließen und miteinander fluchten. Das bedeutet, daß die Scheibe 1 praktisch nur in einer Aussparung des Rahmens 2 eingesetzt werden kann und dort mit dem Rahmen fest haftend verbunden werden muß.

Wie man dazu aus Fig. 3 ersieht, wird zunächst auf den Nutausschnitt 5 für die später einzusetzende Glasscheibe

ein Primer 6 auf Polyurethanbasis aufgetragen, der im allgemeinen aus einem vulkanisierenden Bindemittel besteht. Es ist dabei möglich, daß der Rahmen 2 aus EPDM zunächst nur einen Vulkanisationsgrad von 80 % aufweist, und dann mit dem aufgetragenen Primer voll ausvulkanisiert wird.

Eine andere Möglichkeit besteht darin, diesen Primer auf den bereits ausvulkanisierten Rahmen aufzutragen und anschließend den geprimerten Rahmen kurzzeitig nachzutempern, um damit eine feste Anbindung des Primers an den Rahmen sicherzustellen.

Anschließend wird auf diese erste Primerschicht 6 ein weiterer Lackprimer 7 aufgetragen, der ein sicheres Haften des noch zu beschreibenden Klebers gewährleisten soll.

Parallel dazu ist die Glasscheibe 1 selbst entsprechend vorzubehandeln. Dazu wird der einzuklebende Scheibenrand zunächst mit einem hydrophobierenden Lösungsmittel gereinigt und anschließend ein schwarzer Glasprimer 8 auf Basis eines durch Luftfeuchtigkeit selbst polymerisierenden PU-Lackes aufgetragen. Diese schwarze Primerung soll auch ein späteres Durchscheinen der eigentlichen Klebung verhindern.

Nach der entsprechenden Vorbehandlung der Glasscheibe 1 wird dann ein entsprechender Zweikomponentenkleber 9 auf PU-Basis auf den Lackprimer 6 im Nutausschnitt 5 des Rahmens 2 aufgetragen und schließlich die vorbehandelte Glasscheibe 1 in den Nutausschnitt 5 des vulkanisierten Rahmens 2 eingesetzt. Zweckmäßigerweise wird dabei die Scheibe unter einem vorübergehenden Preßdruck mit dem Rahmen verbunden, bis der Kleber abgebunden hat und ausgehärtet ist.

Bei dem in der Zeichnung dargestellten Ausführungsbeispiel nach Fig. 3 ist die Glasscheibe 1 in eine Aussparung 5 des Profils 2 eingesetzt. Das gleiche Verfahren ist jedoch auch anwendbar, wenn der Rand der Scheibe 1 noch von einer dünnen Außenlippe 10 des Profils 2 umfaßt wird, wie das in Fig. 4 gezeigt ist, wobei diese Außenlippe 10 allein aber nicht ausreichend zur Halterung der Scheibe 1 wäre. Gleichzeitig ist hierbei die Möglichkeit eines Toleranzausgleiches angegeben, da das vorgefertigte Profil 2 und die Scheibe 1 entsprechend ihrem endgültigen Fertigungsmaß vorliegen. Hierbei können dann entsprechende Toleranzen 11 mit dem Komponentenkleber 9 auf PU-Basis ausgefüllt werden, wie das auch bei dem Profil nach Fig. 3 möglich ist. Zweckmäßigerweise wird dazu der vorbehandelte Rahmen 2 in einer entsprechenden Vorrichtung maßhaltig positioniert und die Scheibe 1 dann schwimmend in die Nut 5 eingelegt. Ein verbleibender Spalt 11 kann dann mit der Klebermasse ausgefüllt werden.

Mit dem beschriebenen Verfahren und der entsprechenden Vorbehandlung von Rahmen und Glasscheibe ist es also auf einfache Weise ohne zusätzliche Temperaturbehandlung möglich, auch derart große Scheiben mit einen entsprechenden Rahmen auf herkömmlicher EPDM-Basis dauerhaft zu verbinden, so daß Rahmen und Scheibe anschließend als integrales Bauteil unmittelbar in das zu bestückende Kraftfahrzeug eingesetzt werden können.

METZELER KAUTSCHUK GMBH  München, den 8.5.1985
Unser Zeichen: MK 343 P 84 EP

Patentansprüche

1.  Verfahren zum dauerhaften Konfektionieren einer
Glasscheibe, insbesondere einer Front- oder Heckscheibe für Kraftfahrzeuge, auf die Außenseite eines Rahmens
aus einem elastomeren Material, unter Raumtemperatur,
g e k e n n z e i c h n e t  d u r c h  folgende
Verfahrensschritte:

a) Aufbringen eines lackförmigen Primers auf PU-Basis
   auf den Glasscheiben-Nutausschnitt des zumindest
   teilvulkanisierten Elastomer-Rahmens;

b) Nachheizen des mit dem Primer versehenen Rahmens;

c) Auftragen eines Lackprimers;

d) Reinigen des Umfangsrandes der Glasscheibe mit einem
   hydrophobierenden Lösungsmittel;

e) Auftragen eines schwarzen Glasprimers auf Basis
   eines selbsttätig polymerisierenden PU-Lackes;

f) Aufbringen einer Zweikomponenten-Kleberschicht auf
   den Glasscheiben-Nutausschnitt;

g) Einsetzen der vorbehandelten Glasscheibe auf den
   vulkanisierten Rahmen.

2.  Verfahren nach Anspruch 1,  dadurch gekennzeichnet,
daß der PU-Primer auf den einen Vulkanisationsgrad von
ca. 80 % aufweisenden Rahmen aufgebracht und der Rahmen
mit dem Primer anschließend voll ausvulkanisiert wird.

3. Verfahren nach Anspruch 1, dadurch gekennzeichnet, daß der PU-Primer auf den vollvulkanisierten Rahmen aufgebracht und der Rahmen mit Primer nachgetempert wird.

4. Verfahren nach Anspruch 1 und 2, dadurch gekennzeichnet, daß als Primer für den Rahmen aus EPDM ein vulkanisierendes Bindemittel verwendet wird.

5. Verfahren nach Anspruch 1, dadurch gekennzeichnet, daß die vorbehandelte Glasscheibe unter Preßdruck mit dem Rahmen verbunden wird.

6. Verfahren nach einem der Ansprüche 1 - 5, dadurch gekennzeichnet, daß Toleranzspalten mit einem Kleber aufgefüllt werden.

0163195

## FIG.1

## FIG.2

## FIG.3

## FIG.4